# EUROPÄISCHE PATENTSCHRIFT

(11) **EP 2 708 763 B1**
(45) Veröffentlichungstag und Bekanntmachung des Hinweises auf die Patenterteilung: **18.11.2015**
(21) Anmeldenummer: 13178754.1
(22) Anmeldetag: 31.07.2013
(51) Int. Cl.: F16C 11/06, B60Q 1/076

(54) **Kugelgelenk mit einem beweglichen Verriegelungselement**
Ball joint with movable locking means
Liaison rotule avec un élément mobile de verrouillage

(30) Priorität: 13.09.2012 AT 503832012
(43) Veröffentlichungstag der Anmeldung: 19.03.2014
(73) Patentinhaber: Zizala Lichtsysteme GmbH, 3250 Wieselburg (AT)
(72) Erfinder: Baminger, Peter, 3241 Kirnberg (AT)
(74) Vertreter: Patentanwaltskanzlei Matschnig & Forsthuber OG

(56) Entgegenhaltungen:
- EP-A2- 0 356 750
- DE-A1- 4 434 787
- DE-A1- 10 356 892
- DE-A1-102010 054 291
- GB-A- 2 136 871

## Beschreibung

Die Erfindung betrifft ein Kugelgelenk mit einem ersten Gelenkteil und einem zweiten Gelenkteil zur Verbindung eines Lichtteils mit einem Trägerteil eines Fahrzeugscheinwerfers, wobei der erste Gelenkteil eine hohlkugelförmige Lagerschale und der zweite Gelenkteil einen entsprechenden kugelförmigen Lagerkopf zur Aufnahme in der Lagerschale aufweist.

Die Erfindung betrifft weiters einen Fahrzeugscheinwerfer mit dem erfindungsgemäßen Kugelgelenk.

Zur Fixierung von Bauteilen, beispielsweise von Lichtelementen in Fahrzeugscheinwerfern, sind verschiedene Lösungen in Gebrauch. Aus dem Stand der Technik ist dazu als eine mögliche Variante bekannt, Kugelgelenke zu verwenden, bei denen kugelförmige Gelenkköpfe in hohlkugelförmigen Gelenkschalen montiert werden. Die Kugelgelenke fungieren als Fixierung und gleichzeitig als Drehpunkt für die darin montierten Einheiten, die so in zumindest zwei Raumachsen verstellbar sind.

Aus dem Stand der Technik (z.B. aus DE 44 34 787 A1 und DE 103 56 892 A1) sind Kugelgelenke bekannt, bei denen die Lagerschale ein federnd gelagertes Fixierelement aufweist, das im montierten Zustand des Kugelgelenks verriegelt wird.

Die DE 102 52 983 A1 zeigt einen Fahrzeugscheinwerfer mit einem Kugelgelenk zur Verbindung eines Lichtelements mit einem Trägerelement. Der Lagerkopf wird zusammen mit einer Gelenkschale in eine Aufnahmehülse geschoben und ist nach dieser Montage über eine Einstellvorrichtung mit Verstellbolzen und Getriebeelement verstellbar. Diese Variante weist eine Vielzahl von Einzelteilen auf, die zusätzlich mit einer Reihe von federnden Abschnitten und Rastelementen versehen sind.

Dadurch wird einerseits die Fertigung sowohl der Einzelteile als auch des Scheinwerfers, der diese Einzelteile aufweist, sehr aufwändig - aufgrund des spezifischen Zusammenwirkens der Teile muss das Kugelgelenk in einer genau definierten Reihenfolge zusammengebaut werden. Andererseits sind die federnden Abschnitte und Rastelemente relativ filigran und daher anfällig für Beschädigungen in der Verwendung. Eine weitere derartige Lösung ist in der EP 0 557 869 B1 beschrieben, die im Wesentlichen dieselben Nachteile wie die DE 102 52 983 A1 aufweist.

Nachteilig an diesen bekannten Lösungen ist also, dass sie einerseits aus einer großen Zahl an Einzelteilen bestehen und andererseits teilweise sehr filigrane Rast- und Schnappverbindungen aufweisen, die kompliziert in der Fertigung sind und große Sorgfalt bei der Montage erfordern. Schwenkbare Lagervorrichtungen mit filigranen Schnapphaken sind in der alltäglichen Verwendung nur gering belastbar und geben außerdem eine fixe Montagereihenfolge vor. Bei hoher Montagekraft weisen sie eine geringe Ausziehkraft auf.

Es ist daher eine Aufgabe der Erfindung, ein Kugelgelenk bereitzustellen, das die oben geschilderten Nachteile des Stands der Technik überwindet und einfach, kostengünstig und betriebssicher in der Anwendung ist.

Diese Aufgabe wird mit einem eingangs erwähnten Kugelgelenk erfindungsgemäß dadurch gelöst, dass der erste Gelenkteil zumindest ein federnd gelagertes Fixierelement aufweist, mit dem der Lagerkopf im montierten Zustand des Kugelgelenks in Richtung der Lagerschale pressbar ist und der erste Gelenkteil weiters zumindest ein bewegliches Verriegelungselement aufweist, mit dem im montierten Zustand das Fixierelement gegen Bewegung in eine von der Lagerschale abgewandte Richtung verriegelt ist und dass am zweiten Gelenkteil zumindest ein Steuerelement vorgesehen ist, mit dem das zumindest eine Verriegelungselement im montierten Zustand in einer das Fixierelement verriegelnden Lage gehalten ist.

Die Erfindung erlaubt es, die Geometrie der hohlkugelförmigen Lagerschale und des entsprechend geformten kugelförmigen Lagerkopfes so zu wählen, dass nur eine geringe Kraft zum Zusammensetzen der beiden Gelenkteile vonnöten ist und gleichzeitig durch die Wirkung des Fixierelements ein hohe Ausziehkraft des Kugelgelenks resultiert. Die Lagerschale und der Lagerkopf können so gestaltet sein, dass die Schale den Kopf nur zu einem relativ geringen Grad umfasst, da im montierten Zustand der Lagerkopf vom Fixierelement in die Lagerschale gepresst und dadurch gegen ein Herausfallen oder Ausschnappen aus der Lagerschale gesichert wird. Das Fixierelement stellt beim Einsetzen den nötigen Toleranzausgleich zum Einschnappen des Lagerkopfes in die Lagerschale her, wobei im montierten Zustand das Kugelgelenk spielfrei gehalten wird. Durch das Vorsehen eines beweglichen Verriegelungselements am ersten Gelenkteil, welches bei der Montage des Kugelgelenks in eine Lage bewegbar ist, in der das Verriegelungselement das Fixierelement gegen Bewegung in eine von der Lagerschale abgewandte Richtung sichert bzw. stützt, wird das für das Einsetzen des Lagerkopfes federnd gelagerte Fixierelement im montierten Zustand starr gehalten, sodass ein Ausziehen des Lagerkopfes aus der Schale praktisch nicht mehr bzw. nur unter Zerstörung des Kugelgelenks, das in aller Regel aus Spritzgussteilen besteht, möglich ist. Mit der vorliegenden Erfindung wird somit ein Kugelgelenk zur gelenkigen Lagerung beispielsweise von Scheinwerferreflektoren an entsprechenden Halterungen bzw. Trägern geschaffen, das leicht zusammenzusetzen ist und gleichzeitig eine hohe Stabilität und Dauerfestigkeit im Betrieb aufweist. Das Kugelgelenk besteht dabei aus nur wenigen Einzelteilen, die folglich sehr robust ausgeführt werden können.

Erfindungsgemäß ist das Kugelgelenk dahingehend weitergebildet, dass am zweiten Gelenkteil zumindest ein Steuerelement vorgesehen ist, mit dem das zumindest eine Verriegelungselement im montierten Zustand in einer das Fixierelement verriegelnden Lage gehalten ist. Darüber hinaus ist es im Sinne der vorliegenden Erfindung vorgesehen, dass das Steuerelement das Verriegelungselement beim Zusammensetzen der Gelenkteile in die das Fixierelement verriegelnde Lage drückt. Das Steuerelement dient also dazu, das Verriegelungselement in die verriegelnde Lage zu bewegen und es im montierten Zustand in dieser Lage zu halten. Auf diese Weise kann das Fixierelement beim Einsetzen des Lagerkopfes in die Lagerschale frei ausfedern und wird erst beim Verrasten der Gelenkteile durch das ebenfalls federnde Verriegelungselement gestützt, sodass die Federbewegung durch das Verriegelungselement unterbunden wird.

Bevorzugt ist das zumindest eine Verriegelungselement von einer Platte gebildet, die von dem zumindest einen Steuerelement durch Verbiegen in einer das Fixierelement verriegelnden Lage gehalten ist. Eine solche, insbesondere federnde Platte kann besonders einfach an einem Spritzgussteil ausgebildet werden, wobei die Plattenform gegenüber anderen Geometrien aufgrund ihrer relativen Breite besonders geeignet ist, auch wechselnde Lasten, wie sie insbesondere bei Fahrzeugscheinwerfern auftreten, ohne Materialermüdung aufzunehmen. Gleichzeitig kann eine solche Platte relativ leicht von einem Steuerelement in die verriegelnde Lage gebogen werden.

Um das Zusammensetzen des Kugelgelenks aus den Gelenkteilen zu vereinfachen und dafür zu sorgen, dass das Steuerelement das Verriegelungselement zuverlässig in die verriegelnde Lage drücken und in der Folge dort halten kann, ist die vorliegende Erfindung bevorzugt dahingehend weitergebildet, dass das zumindest eine Steuerelement eine Anfasung aufweist, die beim Zusammenfügen des ersten und zweiten Gelenkteils das Verriegelungselement in einer das Verriegelungselement nicht verriegelnden Lage hintergreift. Die Anfasung am plattenförmigen Steuerelement bildet eine Art Rampe aus, an der das Verriegelungselement beim Zusammensetzen entlang gleitet bis schließlich in der Position, in der der Lagerkopf in der Lagerschale liegt und durch das Fixierelement in selbige gedrückt wird, die volle Dicke des Steuerelements erreicht ist und das Verriegelungselement in der verriegelnden Lage angelangt ist und dort gehalten wird.

Da das erfindungsgemäße Kugelgelenk durch federnde bzw. verformbare Fixier- und Verriegelungselemente stabilisiert wird, sind keine durch Scharniere oder ähnliches beweglichen Teile notwendig, um eine zuverlässige Festlegung der Gelenkteile zu erreichen. Bei der vorliegenden Erfindung ist daher bevorzugt vorgesehen, dass das zumindest eine Verriegelungselement einstückig mit dem ersten Gelenkteil ausgebildet ist und/oder dass das zumindest eine Steuerelement einstückig mit dem zweiten Gelenkteil ausgebildet ist. Die beiden Gelenkteile können gemäß dieser Ausführungsform als Spritzgussteile ausgeführt werden und erfordern keinerlei Zusammenbau, wodurch der Produktionsaufwand und die entsprechenden Kosten gering gehalten werden können.

Um eine möglichst stabile Verriegelung des Fixierelements zu gewährleisten, ist die vorliegende Erfindung bevorzugt dahingehend weitergebildet, dass am ersten Gelenkteil jeweils ein Verriegelungselement zu beiden Seiten des Fixierelements angeordnet ist und jedem Verriegelungselement ein Steuerelement am zweiten Gelenkteil zugeordnet ist. Die Verriegelung erfolgt somit durch zwei Verriegelungselemente die das Fixierelement, das insbesondere als Federzunge ausgebildet ist, abstützen. Insgesamt führt dies zu symmetrischen Kraftflüssen im Kugelgelenk.

Um eine möglichst kompakte Bauweise des Kugelgelenks zu erreichen, ist gemäß einer bevorzugten Ausführungsform der vorliegenden Erfindung vorgesehen, dass die Steuerelemente am kugelförmigen Lagerkopf ansetzen. Bei Fahrzeugscheinwerfern ist im Normalfall eine Verschwenkung um nur wenige Winkelgrade notwendig, um wesentliche Einstellungsbewegungen des Scheinwerfers entsprechend gesetzlichen Vorgaben zu ermöglichen. Bei der vorliegenden Erfindung kann daher der kugelförmige Lagerkopf als Basis für die Festlegung des Steuerelement bzw. der Steuerelemente dienen, wodurch klarerweise die kugelförmige Oberfläche des Kopfes und damit auch die Verschwenkbarkeit des zweiten Gelenkteils verringert bzw. eingeschränkt wird. Bei der vorliegenden Erfindung ist dies jedoch unwesentlich und die Vorteile der platzsparenden Bauweise überwiegen. Zusätzlich können die insbesondere plattenförmigen Steuerelemente als Festlegung des Lagerkopfes am zweiten Gelenkteil fungieren und damit die Stabilität des Kugelgelenks erhöhen.

Bei dem erfindungsgemäßen Fahrzeugscheinwerfer mit zumindest einem Lichtteil und einem Trägerteil für das Lichtteil ist das Lichtteil über ein Kugelgelenk gemäß der vorliegenden Erfindung mit dem Trägerteil verbunden. Es resultiert ein kostengünstig herstellbarer, verstellbarer Fahrzeugscheinwerfer, der sich durch eine hohe Stabilität und Dauerhaftigkeit auszeichnet.

Im Folgenden wird die Erfindung anhand eines nicht einschränkenden Ausführungsbeispiels, das in der Zeichnung dargestellt ist, näher erläutert. In dieser zeigt schematisch:
- Fig. 1: eine Schnittdarstellung der erfindungsgemäßen Kugelgelenk im montierten Zustand,
- Fig. 2: eine perspektivische Darstellung des ersten Gelenkteils,
- Fig. 3: eine perspektivische Darstellung des zweiten Gelenkteils,
- Fig. 4: eine perspektivische Darstellung der beiden Gelenkteile teilweise im Schnitt in nicht montiertem Zustand,
- Fig. 5: eine perspektivische Darstellung der beiden Gelenkteile teilweise im Schnitt in montiertem Zustand,
- Fig. 6: eine weitere perspektivische Darstellung des Kugelgelenks in montiertem Zustand, und
- Fig. 7: eine perspektivische Darstellung eines erfindungsgemäßen Fahrzeugscheinwerfers.

In den Figuren werden aus Gründen der Übersichtlichkeit für gleiche Elemente jeweils die gleichen Bezugszeichen verwendet.

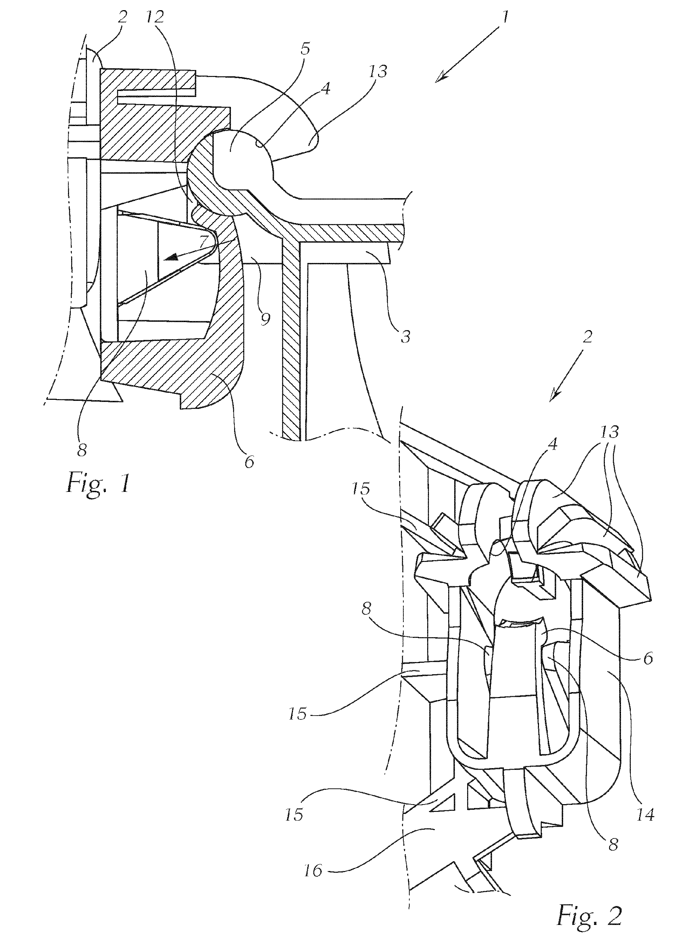

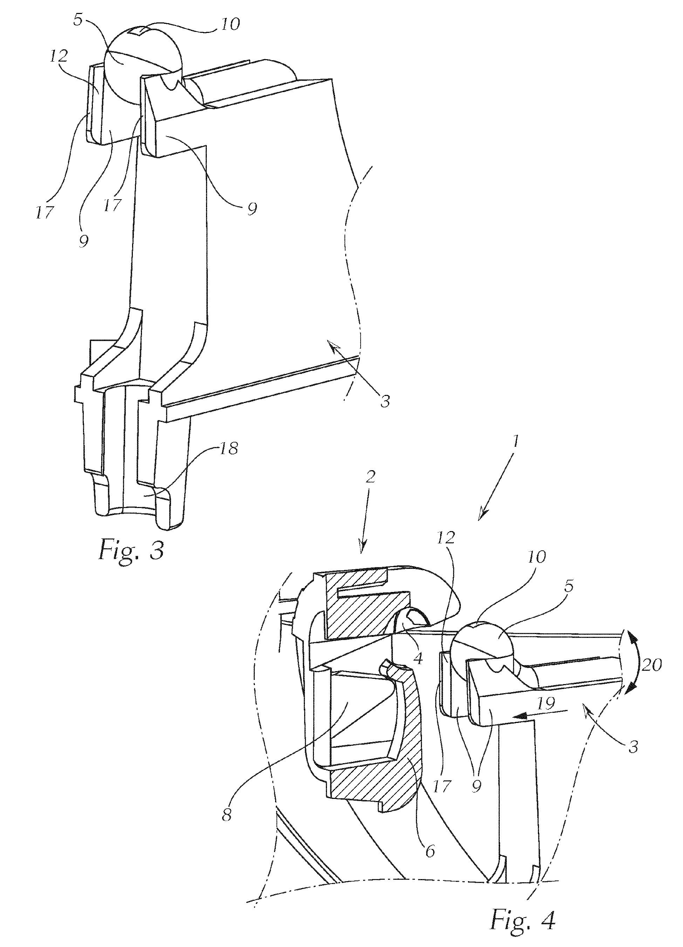

In Figur 1 ist das erfindungsgemäße Kugelgelenk mit 1 bezeichnet. Das Kugelgelenk 1 besteht aus einem ersten Gelenkteil 2 und einem zweiten Gelenkteil 3, die mittels einer Lagerschale 4 und einem darin aufgenommenen Lagerkopf 5 schwenkbar miteinander verbunden sind. Die Lagerschale 4 ist im Wesentlichen hohlkugelförmig ausgebildet und umfasst den Lagerkopf 5, der eine der Lagerschale 4 entsprechende Kugelform aufweist im Umfang von ungefähr 180°, weshalb die formschlüssige Festlegung des Lagerkopfes erst durch die Wirkung des Fixierelements in Form der Federzunge 6 erfolgt, die beim Einsetzen des Lagerkopfes 5 in die Lagerschale 4 in Richtung des Pfeils 7 einfedert und den Lagerkopf 5 im montierten Zustand in die Lagerschale 4 presst. Die Federzunge 6 wiederum wird von einem plattenförmigen Verriegelungselement 8 gestützt, das bei der Montage des Kugelgelenks 1, bei der der Lagerkopf 5 unter Einfedern der Federzunge 6 in die Lagerschale 4 eingesetzt wird, durch die Wirkung eines ebenfalls im wesentlichen plattenförmigen Steuerelements 9 unter die Federzunge 6 gedrückt wird. In Figur 1 sowie in den Figuren 3, 4 und 6 ist zu erkennen, dass der Lagerkopf 5 eine schlitzförmige Ausnehmung 10 an der der Lagerschale 4 abgewandten Seite aufweist, die dazu dient, dem Lagerkopf 5 eine gewisse Kompressibilität zu verleihen, um das Einsetzen des Lagerkopfes 5 in die Lagerschale 4 zu erleichtern. In Figur 1 ist weiters eine Anfasung 12 am Steuerelement 9 zu erkennen, die in weiteren Figuren jedoch noch deutlicher dargestellt ist.

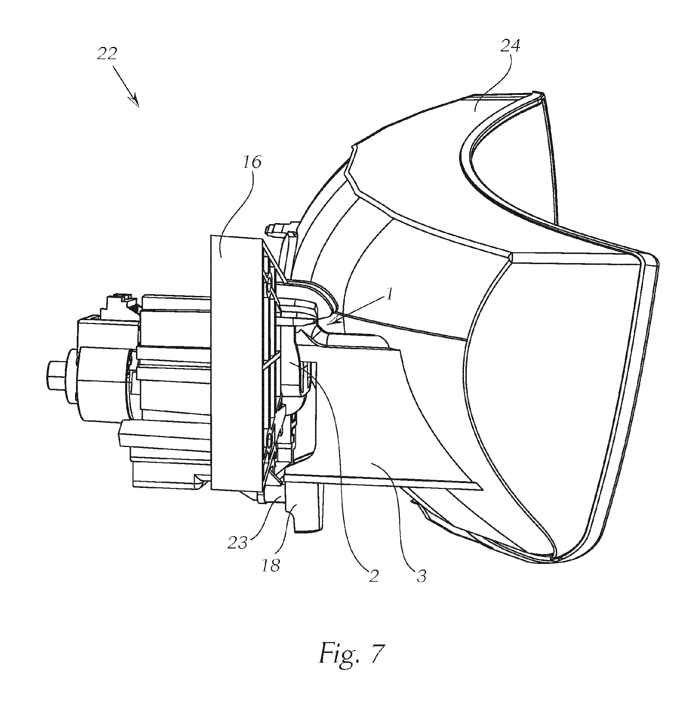

In Figur 2 sind die Lagerschale 4, die Federzunge 6 sowie zwei Verriegelungselemente 8 zur Abstützung der Federzunge 6 erkennbar. Die Lagerschale 4 wird an ihrer Außenseite von Stützrippen 13 gestützt. Die Stützrippen 13 erstrecken sich von einem Kasten 14 der alle funktionsrelevanten Teile des ersten Gelenkteils 2 trägt und über Verstrebungen 15 beispielsweise mit einem Trägerteil 16 eines in Figur 7 dargestellten Fahrzeugscheinwerfers verbunden ist. Die Verriegelungselemente 8 sind in diesem Beispiel zu beiden Seiten der Federzunge 6 bzw. des Fixierelements 6 angeordnet und sind einstückig mit dem ersten Gelenkteil 2 ausgebildet, indem sie sich von Wänden des Kastens 14 erstrecken bzw. an diesen festgelegt sind. Dieser Umstand wird in den folgenden Figuren noch verdeutlicht.

Figur 3 zeigt, dass am zweiten Gelenkteil 3 die Steuerelemente 9 am kugelförmigen Lagerkopf 5 ansetzen. Die plattenförmigen und elastisch beweglichen Steuerelemente 9 weisen an ihren im montierten Zustand dem Verriegelungselement 8 zugewandten Kanten 17 jeweils eine Anfasung 12 auf, die eine Art Rampe ausbilden, an der beim Einsetzen des Lagerkopfes 5 in die Lagerschale 4 die Verriegelungselemente 9 entlang gleiten können. Der Lagerkopf 5 weist an seiner Rückseite eine schlitzförmige Ausnehmung 10 auf, die weiter oben bereits erläutert wurde. Mit 18 ist eine Aufnahme für einen Aktuator bezeichnet, mit dem der zweite Gelenkteil 3 bewegt werden kann.

In Figur 4 ist zu erkennen, dass die Kanten 17 der Steuerelemente 9 beim Zusammensetzen des Kugelgelenks 1 in Richtung der Verriegelungselemente 8 weisen und mit ihren Anfasungen 12 die Verriegelungselemente 8 hintergreifen können. Das Zusammensetzen des Kugelgelenks 1 erfolgt im Wesentlichen durch Einschieben des zweiten Gelenkteils 3 in den ersten Gelenkteil 2 in Richtung des Pfeils 19, wobei allenfalls noch eine geeignete Schwenkbewegung im Sinne des Doppelpfeils 20 ausgeführt werden muss.

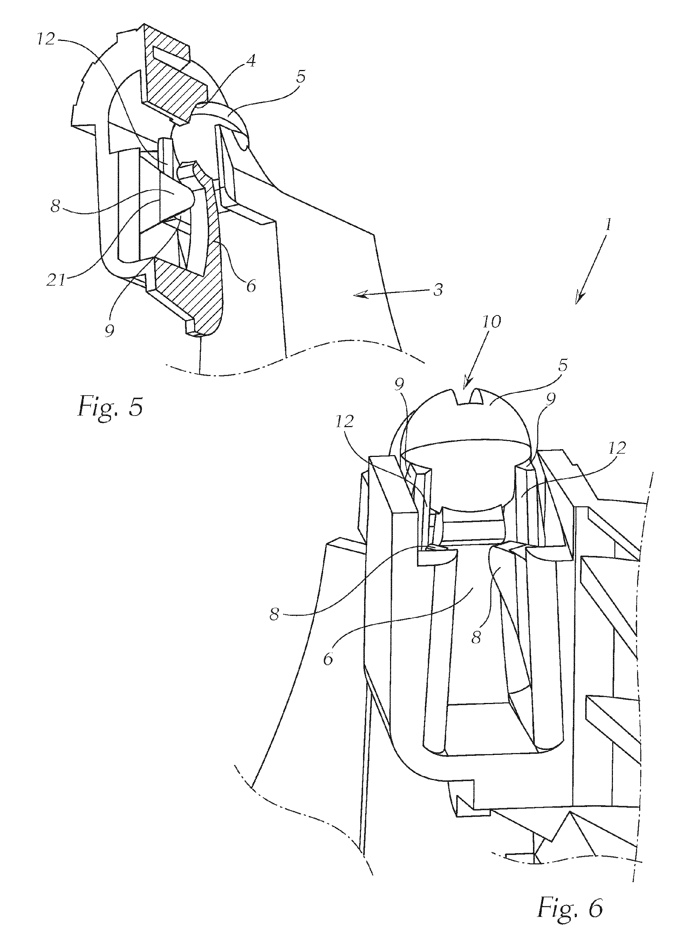

Figur 5 zeigt deutlich, dass im montierten Zustand das Verriegelungselement 8 durch die Wirkung des Steuerelements 9 unter die Federzunge 6 gedrückt wurde und dort gehalten wird, sodass die Federzunge 6 als Fixierelement gegen Bewegung in eine von der Lagerschale 4 abgewandte Richtung verriegelt ist. Mit 21 ist eine Knicklinie bezeichnet, die bei Vorsehen einer geeigneten Materialschwächung beim Verbiegen des Verriegelungselements 8 auftreten kann.

Figur 6 zeigt, dass das Kugelgelenk 1 in diesem Beispiel symmetrisch aufgebaut ist und dass insbesondere zwei Verriegelungselemente 8 zu beiden Seiten der Federzunge 6 als Fixierelement 6 angeordnet und im montierten Zustand in eine Lage gedrückt bzw. gehalten sind, in der das Fixierelement 6 gegen eine Bewegung in eine von der Lagerschale 4 abgewandte Richtung verriegelt ist.

Figur 7 schließlich zeigt die Anordnung des erfindungsgemäßen Kugelgelenks 1 in einem Fahrzeugscheinwerfer 21. Der zweite Gelenkteil 3 ist über das Kugelgelenk 1 gelenkig mit dem ersten Gelenkteil 2 und folglich mit dem Trägerteil 16 verbunden, der weitere Funktionselemente des Fahrzeugscheinwerfers 21 trägt. Mit 23 ist ein Aktuator bezeichnet, der in die Aufnahme 18 eingreift und über ein nicht näher dargestelltes Getriebe und einen geeigneten Motor eine Verstellung des Lichtteils 24 oder eines vergleichbaren Teils des Fahrzeugscheinwerfers 22 gestattet.

Wann immer in der vorstehenden Beschreibung Erläuterungen auf nur einen Teil bezogen sind, von dem jedoch zwei oder mehrere vorgesehen sein können, sind diese Erläuterungen auf alle dieser Teile anwendbar.

## Patentansprüche

1. Kugelgelenk (1) mit einem ersten Gelenkteil (2) und einem zweiten Gelenkteil (3) zur Verbindung eines Lichtteils (24) mit einem Trägerteil (16) eines Fahrzeugscheinwerfers (22), wobei der erste Gelenkteil (2) eine hohlkugelförmige Lagerschale (4) und der zweite Gelenkteil (3) einen entsprechenden kugelförmigen Lagerkopf (5) zur Aufnahme in der Lagerschale (4) aufweist, wobei der
erste Gelenkteil (2) zumindest ein federnd gelagertes Fixierelement (6) aufweist, mit dem der Lagerkopf (5) im montierten Zustand des Kugelgelenks (1) in Richtung der Lagerschale (4) pressbar ist und der erste Gelenkteil (2) weiters zumindest ein bewegliches Verriegelungselement (8) aufweist, mit dem im montierten Zustand das Fixierelement (6) gegen Bewegung in eine von der Lagerschale (4) abgewandte Richtung verriegelt ist,
**dadurch gekennzeichnet, dass** am zweiten Gelenkteil (3) zumindest ein Steuerelement (9) vorgesehen ist, mit dem das zumindest eine Verriegelungselement (8) im montierten Zustand in einer das Fixierelement (6) verriegelnden Lage gehalten ist.

2. Kugelgelenk nach Anspruch 1,
**dadurch gekennzeichnet, dass** das Steuerelement (9)
das Verriegelungselement (8) beim Zusammensetzen der Gelenkteile in die das Fixierelement (6) verriegelnde Lage drückt.

3. Kugelgelenk nach Anspruch 1 or 2,
**dadurch gekennzeichnet, dass** das zumindest
eine Verriegelungselement (8) von einer Platte gebildet ist, die von dem zumindest einen Steuerelement (9) durch Verbiegen in einer das Fixierelement (6) verriegelnden Lage gehalten ist.

4. Kugelgelenk nach einem der Ansprüche 1 bis 3,
**dadurch gekennzeichnet, dass** das
zumindest eine Steuerelement (9) eine Anfasung (12) aufweist, die beim Zusammenfügen des ersten und zweiten Gelenkteils (2, 3) das Verriegelungselement (8) in einer das Verriegelungselement (8) nicht verriegelnden Lage hintergreift.

5. Kugelgelenk nach einem der Ansprüche 1 bis 4,
**dadurch gekennzeichnet, dass** das
zumindest eine Verriegelungselement (8) einstückig mit dem ersten Gelenkteil (2) ausgebildet ist.

6. Kugelgelenk nach einem der Ansprüche 1 bis 4,
**dadurch gekennzeichnet, dass** das
zumindest eine Verriegelungselement (8) einstückig mit dem ersten Gelenkteil (2) ausgebildet ist und/oder dass das zumindest eine Steuerelement (9) einstückig mit dem zweiten Gelenkteil (3) ausgebildet ist.

7. Kugelgelenk nach einem der Ansprüche 1 bis 6,
**dadurch gekennzeichnet, dass** am
ersten Gelenkteil (2) jeweils ein Verriegelungselement (8) zu beiden Seiten des Fixierelements (6) angeordnet ist und jedem Verriegelungselement (8) ein Steuerelement (9) am zweiten Gelenkteil (3) zugeordnet ist.

8. Kugelgelenk nach einem der Ansprüche 1 bis 7,
**dadurch gekennzeichnet, dass** die
Steuerelemente (9) am kugelförmigen Lagerkopf (5) ansetzen.

9. Fahrzeugscheinwerfer mit zumindest einem Lichtteil (24) und einem Trägerteil (16) für das Lichtteil (24), wobei das Lichtteil (24) über ein Kugelgelenk (1) nach einem der Ansprüche 1 bis 8 mit dem Trägerteil (16) verbunden ist.

## Claims

1. A ball joint (1) having a first joint part (2) and a second joint part (3) for connecting a light part (24) to a carrier part (16) of a vehicle headlight (22), wherein the first joint part (2) has a hollow-spherical bearing shell (4) and the second joint part (3) has a corresponding spherical bearing head (5) to be received in the bearing shell (4), wherein the first joint part (2) has at least one resiliently mounted fixing element (6), with which the bearing head (5) in the mounted state of the ball joint (1) can be pressed in the direction of the bearing shell (4), and the first joint part (2) also has at least one movable locking element (8), with which, in the mounted state, the fixing element (6) is locked against movement in a direction facing away from the bearing shell (4), **characterised in that** at least one control element (9) is provided on the second joint part (3), with which control element the at least one locking element (8) in the mounted state is held in a position locking the fixing element (6).

2. The ball joint according to Claim 1, **characterised in that** when the joint parts are assembled the control element (9) presses the locking element (8) into the position locking the fixing element (6).

3. The ball joint according to Claim 1 or 2, **characterised in that** the at least one locking element (8) is formed by a plate that is held in a position locking the fixing element (6) by the at least one control element (9) by bending.

4. The ball joint according to one of Claims 1 to 3, **characterised in that** the at least one control element (9) has a chamfer (12), which when the first and second joint part (2, 3) are joined together engages the locking element (8) from behind in a position not locking the locking element (8).

5. The ball joint according to one of Claims 1 to 4, **characterised in that** the at least one locking element (8) is formed in one piece with the first joint part (2).

6. The ball joint according to one of Claims 1 to 4, **characterised in that** the at least one locking element (8) is formed in one piece with the first joint part (2), and/or **in that** the at least one control element (9) is formed in one piece with the second joint part (3).

7. The ball joint according to one of Claims 1 to 6, **characterised in that** locking elements (8), one for each of the two sides of the fixing element (6), are arranged on the first joint part (2), and each locking element (8) is assigned a control element (9) on the second joint part (3).

8. The ball joint according to one of Claims 1 to 7, **characterised in that** the control elements (9) are positioned on the spherical bearing head (5).

9. A vehicle headlight having at least one light part (24) and a carrier part (16) for the light part (24), wherein the light part (24) is connected to the carrier part (16) via a ball joint (1) according to one of Claims 1 to 8.

## Revendications

1. Joint sphérique (1) comprenant une première partie de joint articulé (2) et une deuxième partie de joint articulé (3) destinées à relier une partie lumineuse (24) à une partie de support (16) d'un projecteur de véhicule (22), la première partie de joint articulé (2) comprenant une coquille de support (4) en forme de sphère creuse et la deuxième partie de joint articulé (3) comprenant une tête de support (5) sphérique correspondante destinée à être logée dans la coquille de support (4),
la première partie de joint articulé (2) comprenant au moins un élément de fixation (6) monté sur ressort, au moyen duquel la tête de support (5), une fois le joint sphérique (1) monté, peut être pressée en direction de la coquille de support (4) et la première partie de joint articulé (2) comprenant en outre au moins un élément de verrouillage (8) mobile au moyen duquel, une fois l'élément de verrouillage monté, l'élément de fixation (6) est empêché de se déplacer dans une direction opposée à la coquille de support (4),
**caractérisé en ce qu'**au moins un élément de commande (9), au moyen duquel l'élément ou les éléments de verrouillage (8), une fois montés, sont retenus dans une position bloquant l'élément de fixation (6), est disposé sur la deuxième partie de joint articulé (3).

2. Joint sphérique selon la revendication 1, **caractérisé en ce que** l'élément de commande (9), lors de la réunion des parties de joint articulé, presse l'élément de verrouillage (8) dans la position bloquant l'élément de fixation (6).

3. Joint sphérique selon la revendication 1 ou 2, **caractérisé en ce que** l'élément ou les éléments de verrouillage (8) sont formés par une plaque qui est retenue par flexion par l'élément ou les éléments de commande (9) dans une position bloquant l'élément de fixation (6).

4. Joint sphérique selon l'une quelconque des revendications 1 à 3, **caractérisé en ce que** l'élément ou les éléments de commande (9) présentent un chanfrein (12) qui, lors de la réunion de la première et de la deuxième partie de joint articulé (2, 3), vient enserrer l'élément de verrouillage (8) par l'arrière dans une position ne bloquant pas l'élément de verrouillage (8).

5. Joint sphérique selon l'une quelconque des revendications 1 à 4, **caractérisé en ce que** l'élément ou les éléments de verrouillage (8) sont réalisés d'une seule pièce avec la première partie de joint articulé (2).

6. Joint sphérique selon l'une quelconque des revendications 1 à 4, **caractérisé en ce que** l'élément ou les éléments de verrouillage (8) sont réalisés d'une seule pièce avec la première partie de joint articulé (2) et/ou **en ce que** l'élément ou les éléments de commande (9) sont réalisés d'une seule pièce avec la deuxième partie de joint articulé (3).

7. Joint sphérique selon l'une quelconque des revendications 1 à 6, **caractérisé en ce que** respectivement un élément de verrouillage (8) est disposé de part et d'autre de l'élément de fixation (6) sur la première partie de joint articulé (2) et **en ce qu'**un deuxième élément de commande (9) sur la deuxième partie de joint articulé (3) est associé à chaque élément de verrouillage (8).

8. Joint sphérique selon l'une quelconque des revendications 1 à 7, **caractérisé en ce que** les éléments de commande (9) sont posés sur la tête de support (5) sphérique.

9. Projecteur de véhicule comprenant au moins une partie lumineuse (24) et une partie de support (16) pour la partie lumineuse (24), la partie lumineuse (24) étant reliée à la partie de support (16) au moyen d'un joint sphérique (1) selon l'une quelconque des revendications 1 à 8.
